# EUROPEAN PATENT SPECIFICATION

(11) **EP 3 401 207 B1**
(45) Date of publication and mention of the grant of the patent: **10.06.2020**
(21) Application number: 18152595.7
(22) Date of filing: 19.01.2018
(51) Int. Cl.: B64C 1/06

(54) **SYSTEMS AND METHODS FOR AIRCRAFT INTEGRATED COMPOSITE FRAMES**
SYSTEME UND VERFAHREN FÜR IN EIN FLUGZEUG INTEGRIERTE VERBUNDRAHMEN
SYSTÈMES ET PROCÉDÉS POUR DES CADRES COMPOSITES INTÉGRÉS D'AÉRONEF

(30) Priority: 10.05.2017 US 201715592124
(43) Date of publication of application: 14.11.2018
(73) Proprietor: The Boeing Company, Chicago, IL 60606-1596 (US)
(72) Inventor: BAILEY, Michael Jason, Chicago, IL Illinois 60606 (US); OFFENSEND, Christopher D., Chicago, IL Illinois 60606 (US)
(74) Representative: Morrall, Jonathan Ian McLachlan

(56) References cited:
- EP-A1- 2 722 145
- EP-A2- 2 695 726
- DE-B3-102014 116 270
- GB-A- 2 134 059
- US-A1- 2008 179 460
- US-B2- 9 314 974
- BUCKINGHAM R O ET AL: "AUTOMATING THE MANUFACTURE OF COMPOSITE BROADGOODS", COMPOSITES, IPC BUSINESS PRESS LTD. HAYWARDS HEATH, GB, vol. 27A, no. 3, 1 March 1996 (1996-03-01) , pages 191-200, XP000587319, ISSN: 0010-4361

## Description

### TECHNICAL FIELD

The disclosure relates generally to aircraft and more specifically to aircraft structures.

### BACKGROUND

Aircraft structures can be made from a variety of different materials. For example, current composite aircraft structures can include structural beams within the nose wheel well assembly in the forward fuselage section of an aircraft fuselage that mixes composite beams with titanium shear-ties and aluminum plates. The multiple components of different materials are needed as current composite beams are required to be manufactured with constant web heights and so cannot be manufactured with complex geometries. As the structural elements of the nose wheel well assembly requires such complex geometries, additional parts made from other materials are needed for a full beam assembly. However, the multiple components lead to higher costs, tolerance stack-ups, further points of maintenance, and a less rigid structure.

EP 2 695 726 A2 discloses a method and apparatus comprising a monolithic composite structure, a first edge of the monolithic composite structure, and a second edge of the monolithic composite structure. The first edge of the monolithic composite structure has a first shape configured to be connected to a structure in a vehicle. The second edge of the monolithic composite structure has a second shape configured to be connected to a body of the vehicle.

US 2008/0179460 A1 discloses an invention that relates to an aircraft load frame made of a composite material, characterized in that it comprises two side elements and a base element, the side elements being joined at the inner part of the frame by means of the base element and each of the side elements comprising a leg joining the frame to the aircraft fuselage skin, a web and a lower flange joining the web and the base element.

EP 2 722 145 A1 discloses an invention that provides a method for manufacturing a dry textile preform using two pairs of rollers forming respectively a first and second flange and comprising the steps of adjusting a difference between the rolling speed of the pair of first rollers and the rolling speed of the pair of second rollers to form a curvature radius of the fabric sheet depending on the adjusted difference; and adjusting the distance between the two pairs of rollers perpendicular to the movement direction of the fabric sheet to form a web portion between the first flange and the second flange, the web height depending on the adjusted distance. The method may be used to manufacture Z-shaped, U-shaped or C-shaped dry textile preforms used in the construction of reinforcement profiles for airborne vehicles.

GB 2 134 059 A discloses a composite helicopter fuselage that comprises at least one main frame member having two generally vertical side beams joined by generally horizontal top and bottom beams. Each side beam comprises a top hat section bonded to a filler material and the top and bottom beams each comprise two channel sections arranged back to back and bonded to a filler material. An area at each end of the top and bottom beams is devoid of filler and the top hat sections of the side beams are slotted between the channel sections, the parts then being joined by bonding the internal surfaces of the channel sections to the external surfaces of the top hat sections. The fuselage is completed by panels attached to the external flanges of the side and top and bottom beams.

DE 10 2014 116 270 B3, according to a machine translation, discloses a system for the continuous production of a curved profile preform from flat semi-finished fiber products, and a method for this, initially formed belt sections by a forming and then with the help of two rollers which are spaced from each other in the conveying direction.

Buckingham R O ET AL "AUTOMATING THE MANUFACTURE OF COMPOSITE BROADGOODS", COMPOSITES, IPC BUSINESS PRESS LTD. HAYWARDS HEATH, GB, (19960301), vol. 27A, no. 3, ISSN 0010-4361, pages 191 - 200, discloses the work completed under a three year European Commission research and development contract, entitled 'Integrating automatic handling of flexible materials, composite component design and quality assurance procedures'. The paper describes the reasons for conducting the work, the main drivers that shaped the final outcome, the key areas of study and the technical solution adopted, with a description of the system, tests conducted and a discussion of the achievements and future options. A machine was built that took prepreg material from a standard roll, through removal of the backing sheets, visual inspection, cutting, handling, layup and consolidation to form a multi-layer doubly curved component.

### SUMMARY

In aspects, there are provided a system and a method for a variable web height aircraft composite structural beam and applications thereof, as defined in the independent claim(s).

In a first aspect, an aircraft according to independent claim 1 is disclosed.

In a second aspect a method according to independent claim 7 is disclosed.

A more complete understanding of the disclosure will be afforded to those skilled in the art, as well as a realization of additional advantages thereof, by a consideration of the following detailed description of one or more implementations. Reference will be made to the appended sheets of drawings that will first be described briefly.

### BRIEF DESCRIPTION OF THE DRAWINGS

Fig. 1 illustrates a top view of an aircraft in accordance with an example of the disclosure.
Fig. 2 illustrates a perspective view of an example aircraft structure in accordance with an example of the disclosure.
Fig. 3 illustrates an example of a variable web height aircraft composite structural beam in accordance with an example of the disclosure.
Figs. 4A-C illustrate examples of an aircraft wheel well composite structure in accordance with an example of the disclosure.
Fig. 5 is a flowchart detailing production of a variable web height aircraft composite structural beam in accordance with an example of the disclosure.

Examples of the disclosure and their advantages are best understood by referring to the detailed description that follows. It should be appreciated that like reference numerals are used to identify like elements illustrated in one or more of the figures.

### DETAILED DESCRIPTION

Systems and techniques for variable height web composite frame beams are described in this disclosure. In certain examples, the systems and techniques described herein may be used for aircraft structure. The variable height web composite frame beam disclosed herein is a laminate composite structural beam that includes a variable height web with a first flange on one end of the web, and a second flange on another portion of the web. At different portions of the variable height web composite frame beam, the first flange and the second flange are separated by different distances.

Generally, certain aircraft structures (such as, for example, the structure proximate to the nose wheel well) are attached with a combination of beams, shear-ties, plates, and fasteners of different materials. Such combinations increase parts counts, allow for a greater amount of points of failure, decrease structural rigidity, and increase maintenance and assembly time. The laminate composite structural beam described herein allows for replacement of such combination of beams, shear-ties, plates, and fasteners with a single laminate composite structural beam.

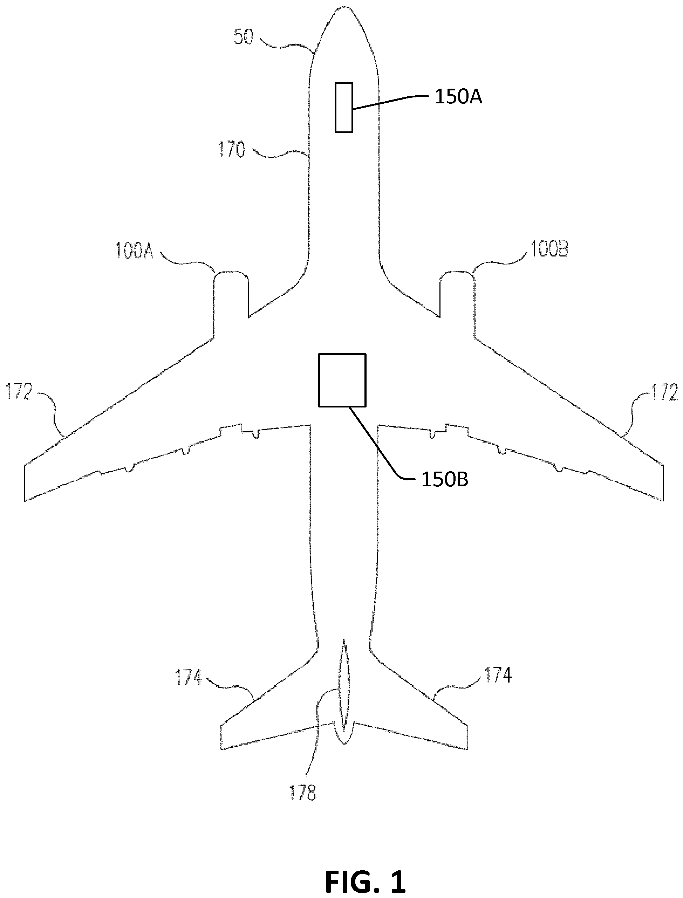

Fig. 1 illustrates a top view of an aircraft in accordance with an example of the disclosure. The aircraft 50 of Fig. 1 includes a fuselage 170, wings 172, horizontal stabilizers 174, aircraft propulsors 100A and 100B, and a vertical stabilizer 178.

The aircraft 50 described in Fig. 1 is exemplary and it is appreciated that in other examples, the aircraft 50 may include less or additional components (e.g., no horizontal stabilizer, additional stabilizers, additional sensors, and/or additional controllers). Additionally, the structures and techniques described herein may be extended to other vehicles such as automobiles, watercrafts, and other aircrafts such as helicopters, Unmanned Aerial Vehicles, etc.

The aircraft propulsors 100A and 100B can be any type of propulsor such as turbofans, turboprops, turbojets, ramjets, and/or any other type of propulsor that produces thrust to move the aircraft 50. The wings 172, horizontal stabilizers 174, and vertical stabilizer 178 can produce lift and/or control movement of the aircraft 50. Certain other examples of aircraft can include any number of aircraft propulsors, wings, horizontal stabilizers, and/or vertical stabilizers.

The fuselage 170 is a fuselage that includes one or more composite beams. Certain other beams can also be composite or metallic (e.g., aluminum, titanium, steel, or another such metal). The fuselage 170 can, in certain examples, also include metallic and/or composite aircraft skin. The beams are coupled to the metallic skin, to each other, and/or to other components of the aircraft 50. At least some of the beams are used to form a load bearing structure of the aircraft 50.

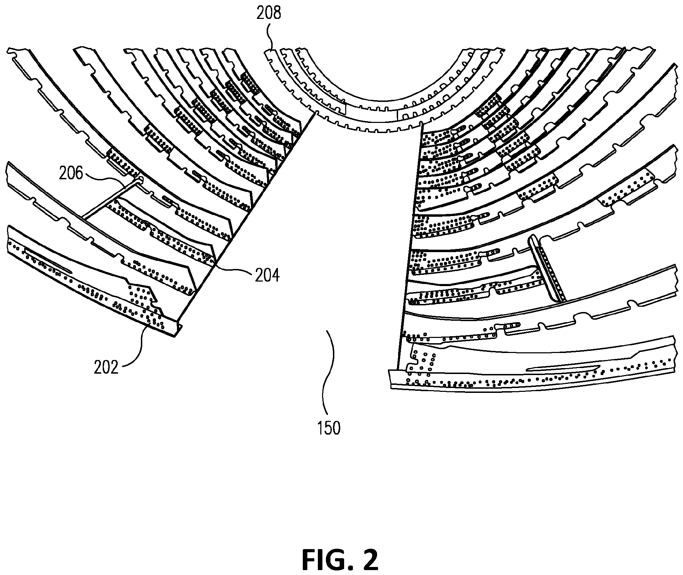

The fuselage 170 also includes wheel well openings 150A and 150B. The wheel well openings 150A and 150B are openings within the fuselage 170 that allow for landing gear and other components to be deployed. While certain beams of the fuselage 170 are continuous beams (e.g., they wrap around the inner circumference of a cross section of a section of the fuselage 170), other beams are discontinuous. The wheel well openings 150A and 150B can include one or more discontinuous laminate composite structural beams located proximate to the wheel well openings 150A and 150B. Such laminate composite structural beams are discontinuous due to the wheel well openings preventing the structural beams from fully wrapping around the circumference within the fuselage. The continuous and discontinuous laminate composite structural beams are illustrated in further detail in Fig. 2.

Fig. 2 illustrates a perspective view of an example aircraft structure in accordance with an example of the disclosure. Fig. 2 shows the aircraft structure from inside the fuselage looking outwards. As such, Fig. 2 shows wheel well opening 150, discontinuous laminate composite structural beam 202, short beam 204, stringer 206, and continuous laminate composite structural beam 208. Discontinuous laminate composite structural beam 202, short beam 204, stringer 206, and continuous laminate composite structural beam 208 can form at least a portion of a structure of a fuselage (e.g., fuselage 170). Various other examples of the fuselage can include one or more other structural components.

The fuselage of an aircraft can be divided into a plurality of sections (e.g., divided into a plurality of lengthwise sections). Each section may include one or more continuous and/or discontinuous laminate composite structure beams to provide rigidity to the structure. The continuous laminate composite structural beam 208 can wrap around the inner circumference of a cross section of a portion of the fuselage. The discontinuous laminate composite structural beam 202 can, in certain examples, resemble an O shape. As such, for example, the continuous laminate composite structural beam 208 can be a continuous unbroken beam. Various examples of the continuous laminate composite structural beam 208 can be constructed from one component or a plurality (e.g., two, three, four, or five or more) of components. When the continuous laminate composite structural beam 208 is constructed from a plurality of components, the plurality of components may be coupled together via adhesives, welding, mechanical fasteners, and/or other such coupling techniques.

The wheel well opening 150 can be wheel well opening 150A or 150B shown in Fig. 1 or another such wheel well opening. Due to the wheel well opening 150, structural beams in the section of the fuselage proximate to the wheel well opening 150 cannot be continuous as there is an opening within the circumference of the fuselage. As such, discontinuous laminate composite structural beam 202 is used in the section of the fuselage around wheel well opening 150.

Discontinuous laminate composite structural beam 202 is a structural beam that wraps around a portion of the inner circumference of a cross section of the fuselage. The discontinuous laminate composite structural beam 202 can, in certain examples, resemble a C shape. The discontinuous portion of the discontinuous laminate composite structural beam 202 can accommodate the wheel well opening 150 and thus allow for deployment of landing gear and/or other components through the wheel well opening 150.

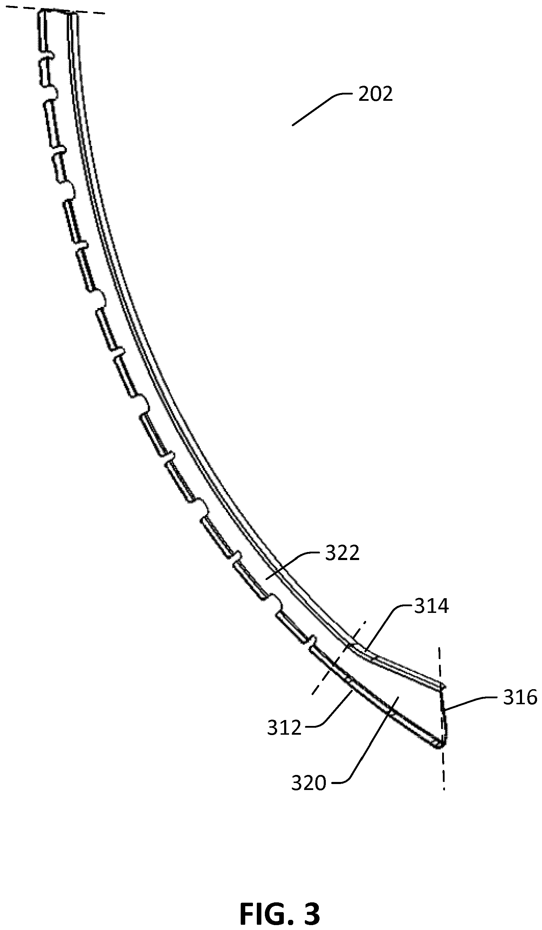

Various examples of the discontinuous laminate composite structural beam 202 can be constructed from one component. However, the discontinuous laminate composite structural beam 202 can include variable web height. Such variable web height is described in further detail in Fig. 3.

The short beam 204 can be another structural beam of the fuselage. The short beam 204 is coupled to stringer 206 and the stringer 206 can be coupled to the discontinuous laminate composite structural beam 202 and/or continuous laminate composite structural beam 208 to form the structure of the fuselage. In certain examples, the stringer 206, the short beam 204, and/or the continuous laminate composite structural beam 208 can also include variable web heights.

Fig. 3 illustrates an example of a variable web height aircraft composite structural beam. Fig. 3 shows the discontinuous laminate composite structural beam 202 of Fig. 2. As shown in Fig. 3, the discontinuous laminate composite structural beam 202 includes a variable height web 316, a first flange 312 located on a first end of the web, and a second flange 314 located on a second end of the web. At least a portion of the first flange 312 can be configured to conform to an inner portion of the fuselage of the aircraft so that the discontinuous laminate composite structural beam 202 can attach to the skin of the fuselage to provide structural support.

As shown in Fig. 3, the discontinuous laminate composite structural beam 202 is a single piece produced from a composite (e.g., a combination or one or more of carbon fiber, Kevlar, fiberglass, resin, and/or other synthetic composites). As such, while discontinuous laminate composite structural beam 202 includes distinct features such as variable height web 316, first flange 312, and second flange 314, such distinct features may all be part of one component that is laid up from one or more composite plies.

In Fig. 3, the discontinuous laminate composite structural beam 202 includes a first portion 320 and a second portion 322. The variable height web 316 is a first height in the first portion 320, and is a second height different from the first height in the first portion 320. That is, the first flange 312 can be separated from the second flange 314 by a first distance in the first portion 320 and separated by a second distance in the second portion 322. In certain examples, the first portion and/or the second portion can include tapering parts within the portions of the web 316. That is, the height of the web 316 in such portions can change within the portion. Fig. 3 illustrates such an example as the first portion 320 tapers from one height to another height. However, though the first portion 320 tapers in Fig. 3, the height of at least part of the first portion 320 is still different from the height of at least part of the second portion 322.

While Fig. 3 illustrates a discontinuous laminate composite structural beam 202 with a first portion and a second portion, other examples of discontinuous laminate composite structural beams can include three or more portions and each of those portions can different heights. In certain other examples, at least two of those portions can be the same height (e.g., such an example would include portions of the ends of the discontinuous laminate composite structural beam that are the same height, but with a middle portion that is a different height). The first flange 312 and the second flange 314 can, in certain examples, be parts of the discontinuous laminate composite structural beam 202 that are arranged in an orientation different from that of the variable height web 316. That is, as shown in Fig. 3, in a cross section of Fig. 3 along geometric plane 324A, the major length of the first flange 312 and the second flange 314 (e.g., the longer of the two sides that define the cross section of the first flange 312 and/or the second flange 314) are oriented approximately 90 degrees from that of the major length of variable height web 316 (e.g., the longer of the two sides that define the cross section of the web 316). Such an orientation can increase stiffness of the discontinuous laminate composite structural beam 202 and/or arrange certain surfaces of the discontinuous laminate composite structural beam 202 so that the discontinuous laminate composite structural beam 202 can be coupled to other portions of the aircraft. Other examples can orient the first flange 312, the second flange 314, and/or other flanges in different orientations (e.g., oriented 30, 45, 60, 120, 135, or 150 degrees from the web 316) or include discontinuous laminate composite structural beams of other geometries. In certain other examples, the discontinuous laminate composite structural beam can include 3-dimensionally varying geometry.

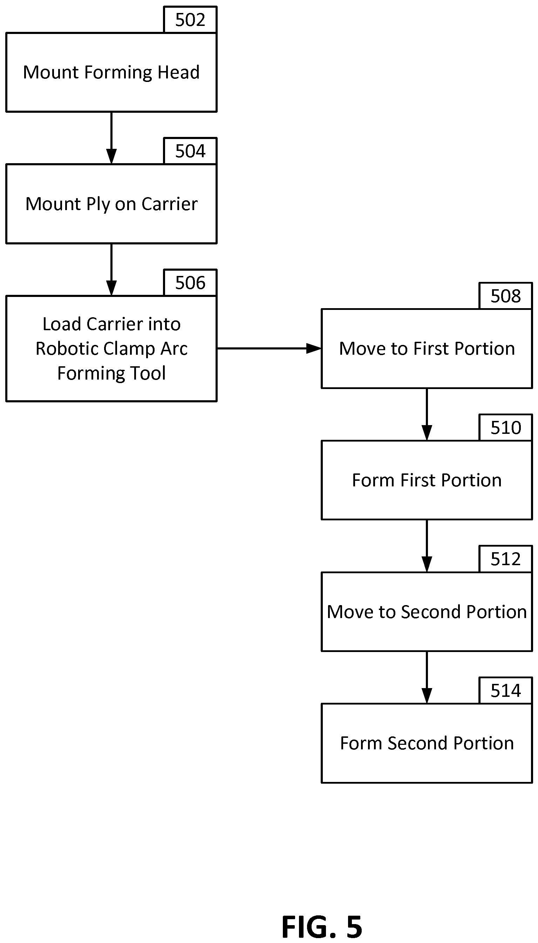

As shown in Fig. 3, the first flange 312 is located on an outer portion of the variable height web 316 and is configured to be installed on an aircraft closer to the aircraft fuselage than the second flange 314. As the variable height web 316 is curved, the first flange 312 can follow or substantially follow at least a portion of the curved portion of the variable height web 316. As such, the first flange 312 includes cut outs to allow for the first flange 312 to more easily bend to conform to the curvature of the variable height web 316. Other examples of the first flange 312 could not include such cut outs and the first flange 312 can then be constructed to bend along the curvature of the variable height web 316 via robotic clamp arc forming. Robotic clamp arc forming is described in further detail in Fig. 5.

The second flange 314 is located on an inner portion of the variable height web 316. The second flange 314 can also follow or substantially follow at least a portion of the curved portion of the variable height web 316. As shown in Fig. 3, the second flange 314 is unbroken (e.g., does not include the cut outs of first flange 312), but other examples of the second flange 314 can include cut outs.

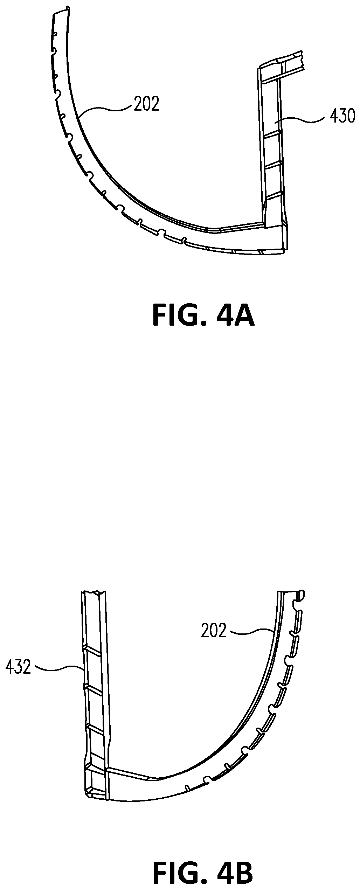

Figs. 4A-C illustrate examples of an aircraft wheel well composite structure. The discontinuous laminate composite structural beam 202 can be coupled to one or more wheel well beams to further define a wheel well. Coupling the discontinuous laminate composite structural beam 202 to one or more wheel well beams can allow for the volume of the wheel well that contains the landing gear when the landing gear is in the retracted position to be defined.

Figs. 4A-C illustrate three such example wheel well beams. As shown in Figs. 4A-C, each discontinuous laminate composite structural beam 202 in Figs. 4A-C is coupled to a wheel well beam that defines the vertical portion of the wheel well.

In Fig. 4A, the discontinuous laminate composite structural beam 202 is coupled to wheel well beam 430. Wheel well beam 430 is configured to be disposed on top of the variable height web of the discontinuous laminate composite structural beam 202.

In Fig. 4B, the discontinuous laminate composite structural beam 202 is coupled to wheel well beam 432. Wheel well beam 432 is configured to be disposed adjacent to an end of the discontinuous laminate composite structural beam 202.

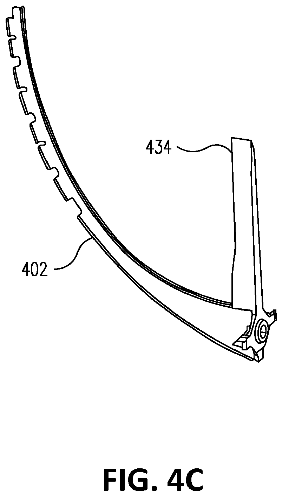

In Fig. 4C, the discontinuous laminate composite structural beam 202 is coupled to wheel well beam 434. The wheel well beam 434 is configured to be disposed both on top of and adjacent to an end of the discontinuous laminate composite structural beam 202. The wheel well beam 434 additionally includes ribs and features that locate the wheel well beam 434 relative to the discontinuous laminate composite structural beam 202 to ensure correct positioning of the wheel well beam 434 relative to the discontinuous laminate composite structural beam 202.

While Figs. 4A-C describe wheel well beams that are separate components from that of the discontinuous laminate composite structural beam 202, according to an embodiment, the discontinuous laminate composite structural beam 202 and the wheel well beam are one component (e.g., manufactured via, for example, robotic clamp arc forming) to allow for a combined discontinuous laminate composite structural beam 202 and wheel well beam that includes variable web heights.

Fig. 5 is a flowchart detailing production of a variable web height aircraft composite structural beam in accordance with an example of the disclosure. In block 502 of Fig. 5, a forming head is mounted on a robot, robotic arm, or a portion thereof. Additionally, a nosepiece configured to substantially match or form one or more local contours of a portion of the variable web height aircraft composite structural beam can also be attached to the forming head.

One or more plies that form the variable web height aircraft composite structural beam are placed in a designated position on a ply carrier in block 504. In block 506, the ply carrier is then loaded onto the robotic clamp arc forming tool. The ply carrier is then ready for layup, forming, and compaction operations.

In block 508, a portion of the robot, robotic arm, and/or tool is moved to a first portion of the variable web height aircraft composite structural beam to form the first portion or a feature of the first portion in block 510. In certain examples, the ply or plies are swept over a section of the tool to move the forming head over the tool to form a curvature of the first portion.

The portion of the robot, robotic arm, and/or tool is then moved to a second portion of the variable web height aircraft composite structural beam in block 512 to form the second portion or a feature of the second portion in block 514. The first portion and the second portion can include different or variable web heights.

Techniques and apparatuses used to produce variable web height aircraft composite structural beams are described in further detail in U.S. Patent Application No. 12/945,024 filed Nov. 12, 2010 and issued as U.S. Patent No. 8,551,380, 61/749,881 filed January 7, 2013, 13/736,021 filed January 7, 2013, 13/901,813 filed May 24, 2013 and issued as U.S. Patent No. 9,314,974, 14/525,500 filed October 28, 2014.

Examples described above illustrate but do not limit the invention. It should also be understood that numerous modifications and variations are possible in accordance with the principles of the present invention. Accordingly, the scope of the invention is defined only by the following claims.
principles of the present invention. Accordingly, the scope of the invention is defined only by the following claims.

## Claims

1. An aircraft comprising:
a fuselage (170) comprising at least one variable height web composite frame beam wherein the variable height web composite frame beam is a laminate composite structural beam comprising:
a variable height web (316);
a first flange (312) located on an outer portion of the web;
a second flange (314) located on an inner portion of the web, wherein the first flange and the second flange are separated by a first distance at a first portion (320) of the laminate composite structural beam and separated by a second distance at a second portion (322) of the laminate composite structural beam;
wherein the laminate composite structural beam is configured to be disposed adjacent to an aircraft wheel well opening (150);
wherein, of the laminate composite structural beam, the first distance is greater than the second distance, wherein the first portion of the laminate composite structural beam is adjacent to the wheel well opening of the fuselage, and wherein the second portion of the laminate composite structural beam is disposed farther from the wheel well opening than the first portion of the laminate composite structural beam; and
wherein the laminate composite structural beam is a discontinuous beam (202) and further comprises a first end disposed near the first portion of the laminate composite structural beam and the fuselage further comprises a wheel well beam (430, 432, 434) coupled to the first end,
wherein the wheel well beam further defines a vertical portion of the wheel well, and further wherein the discontinuous laminate composite structural beam and the wheel well beam are one component.

2. The aircraft of claim 1, wherein the fuselage further comprises a continuous laminate composite structural beam (208).

3. The aircraft of claims 1-2, wherein the fuselage further comprises a fuselage skin and at least a portion of the first flange conforms to an inner portion of the fuselage skin.

4. The aircraft of claims 1-3, wherein the laminate composite structural beam smoothly transitions between the first portion of the discontinuous laminate composite structural beam and the second portion of the discontinuous laminate composite structural beam.

5. The aircraft of claims 1-4, wherein the discontinuous laminate composite structural beam comprises carbon fiber and resin.

6. The aircraft of claims 1-5, further comprising:
a wing (172) coupled to the fuselage; and
an aircraft propulsor (100) coupled to the wing and/or the fuselage.

7. A method comprising:
mounting a ply on a ply carrier;
loading the ply carrier into a robotic clamp arc forming tool;
moving a forming head of the robotic clamp arc forming tool to a first portion (320) of the ply, wherein the ply forms at least one layer of a laminate composite aircraft structural beam, and wherein the laminate composite aircraft structural beam comprises a variable height web (316), a first flange (312) located on an outer portion of the web, and a second flange (314) located on an inner portion of the web;
forming the ply at the first portion, and wherein the first flange and the second flange are separated by a first distance at the first portion of the ply;
moving the forming head to a second portion (322) of the ply; and
forming the ply at the second portion, wherein the first flange and the second flange are separated by a second distance at the second portion of the ply;
wherein the laminate composite structural beam is configured to be disposed adjacent to an aircraft wheel well opening (150);
wherein, of the laminate composite structural beam, the first distance is greater than the second distance, wherein the first portion of the ply is adjacent to the wheel well opening of the fuselage, and wherein the second portion of the ply is disposed farther from the wheel well opening than the first portion of the ply; and
wherein the laminate composite structural beam is a discontinuous beam (202) and further comprises a first end disposed near the first portion of the ply and the fuselage further comprises a wheel well beam (430, 432, 434) coupled to the first end,
wherein the wheel well beam further defines a vertical portion of the wheel well, and further wherein the discontinuous laminate composite structural beam and the wheel well beam are one component.

8. The method of claim 7, further comprising:
coupling the forming head to the robotic clamp arc forming tool.

9. The method of claims 7-8, wherein the ply is a composite resin ply.

## Patentansprüche

1. Flugzeug, aufweisend:
einen Rumpf (170), aufweisend mindestens einen Verbundrahmenträger mit einem Steg variabler Höhe, wobei der Verbundrahmenträger mit einem Steg variabler Höhe ein Strukturträger aus einem Schichtverbund ist, aufweisend:
einen Steg (316) mit variabler Höhe;
einen ersten Flansch (312), der sich an einem äußeren Abschnitt des Stegs befindet;
einen zweiten Flansch (314), der sich an einem inneren Abschnitt des Stegs befindet, wobei der erste Flansch und der zweite Flansch durch einen ersten Abstand an einem ersten Abschnitt (320) des Strukturträgers aus einem Schichtverbund und durch einen zweiten Abstand an einem zweiten Abschnitt (322) des Strukturträgers aus einem Schichtverbund getrennt sind;
wobei der Strukturträger aus einem Schichtverbund dazu konfiguriert ist, benachbart zu einer Fahrwerkschacht-Öffnung (150) eines Flugzeugs angeordnet zu werden;
wobei von dem Strukturträger aus einem Schichtverbund der erste Abstand größer als der zweite Abstand ist, wobei der erste Abschnitt des Strukturträgers aus einem Schichtverbund an die Fahrwerkschacht-Öffnung des Rumpfs angrenzt, und wobei der zweite Abschnitt des Strukturträgers aus einem Schichtverbund weiter von der Fahrwerkschacht-Öffnung angeordnet ist als der erste Abschnitt des Strukturträgers aus einem Schichtverbund; und
wobei der Strukturträger aus einem Schichtverbund ein diskontinuierlicher Träger (202) ist und ferner ein erstes Ende aufweist, das in der Nähe des ersten Abschnitts des Strukturträgers aus einem Schichtverbund angeordnet ist, und der Rumpf ferner einen Fahrwerkschacht-Träger (430, 432, 434) aufweist, der mit dem ersten Ende verbunden ist,
wobei der Fahrwerkschacht-Träger ferner einen vertikalen Abschnitt des Fahrwerkschachts definiert und wobei ferner der diskontinuierliche Strukturträger aus einem Schichtverbund und der Fahrwerkschacht-Träger eine Komponente sind.

2. Flugzeug nach Anspruch 1,
wobei der Rumpf ferner einen kontinuierlichen Strukturträger (208) aus einem Schichtverbund aufweist.

3. Flugzeug nach Anspruch 1 bis 2, wobei der Rumpf ferner eine Rumpfhaut aufweist und mindestens ein Abschnitt des ersten Flansches einem inneren Abschnitt der Rumpfhaut entspricht.

4. Flugzeug nach Anspruch 1 bis 3, wobei der Strukturträger aus einem Schichtverbund sanft zwischen dem ersten Abschnitt des diskontinuierlichen Strukturträgers aus einem Schichtverbund und dem zweiten Abschnitt des diskontinuierlichen Strukturträgers aus einem Schichtverbund übergeht.

5. Flugzeug nach Anspruch 1 bis 4, wobei der diskontinuierliche Strukturträger aus einem Schichtverbund Kohlenstofffaser und Harz aufweist.

6. Flugzeug nach Anspruch 1 bis 5, ferner aufweisend:
einen Flügel (172), der mit dem Rumpf verbunden ist und
eine Flugzeugs-Antriebsvorrichtung (100), die mit dem Flügel und/oder dem Rumpf verbunden ist.

7. Verfahren, aufweisend:
Montieren einer Lage auf einem Lagenträger;
Einlegen des Lagenträgers in ein robotergesteuertes bogenausbildendes Spannwerkzeug;
Bewegen eines Formkopfs des robotergesteuerten bogenausbildenden Spannwerkzeugs zu einem ersten Abschnitt (320) der Lage, wobei die Lage mindestens eine Schicht eines Flugzeug-Strukturträgers aus einem Schichtverbund ausbildet, und wobei der Flugzeug-Strukturträger aus einem Schichtverbund einen Steg (316) variabler Höhe, einen ersten Flansch (312), der an einem äußeren Abschnitt des Stegs angeordnet ist, und einen zweiten Flansch (314), der an einem inneren Abschnitt des Stegs angeordnet ist, aufweist;
Ausbilden der Lage an dem ersten Abschnitt, und wobei der erste Flansch und der zweite Flansch durch einen ersten Abstand an dem ersten Abschnitt der Lage getrennt sind;
Bewegen des Formkopfs zu einem zweiten Abschnitt (322) der Lage und
Ausbilden der Lage an dem zweiten Abschnitt, wobei der erste Flansch und der zweite Flansch durch einen zweiten Abstand an dem zweiten Abschnitt der Lage getrennt sind;
wobei der Strukturträger aus einem Schichtverbund dazu konfiguriert ist, benachbart zu einer Fahrwerkschachts-Öffnung (150) eines Flugzeugs angeordnet zu werden;
wobei von dem Strukturträger aus einem Schichtverbund der erste Abstand größer als der zweite Abstand ist, wobei der erste Abschnitt der Lage an die Fahrwerksschacht-Öffnung des Rumpfes angrenzt, und wobei der zweite Abschnitt der Lage weiter von der Fahrwerkschachts-Öffnung angeordnet ist als der erste Abschnitt der Lage; und
wobei der Strukturträger aus einem Schichtverbund ein diskontinuierlicher Träger (202) ist und ferner ein erstes Ende aufweist, das in der Nähe des ersten Abschnitts der Lage angeordnet ist, und der Rumpf ferner einen Fahrwerkschachts-Träger (430, 432, 434) aufweist, der mit dem ersten Ende verbunden ist,
wobei der Fahrwerkschachts-Träger ferner einen vertikalen Abschnitt des Fahrwerkschachts definiert und wobei ferner der diskontinuierliche Strukturträger aus einem Schichtverbund und der Fahrwerkschachts-Träger eine Komponente sind.

8. Verfahren nach Anspruch 7, ferner aufweisend:
Koppeln des Formkopfs mit dem robotergesteuerten bogenausbildenden Spannwerkzeug.

9. Verfahren nach Anspruch 7 bis 8, wobei die Lage eine Lage aus Verbundharz ist.

## Revendications

1. Aéronef comprenant :
un fuselage (170) comprenant au moins une poutre de cadre composite d'âme à hauteur variable dans lequel la poutre de cadre composite d'âme à hauteur variable est une poutre structurelle composite stratifiée comprenant :
une âme à hauteur variable (316) ;
une première bride (312) située sur une portion extérieure de l'âme ;
une seconde bride (314) située sur une portion intérieure de l'âme, dans lequel la première bride et la seconde bride sont séparées d'une première distance au niveau d'une première portion (320) de la poutre structurelle composite stratifiée et séparées d'une seconde distance au niveau d'une seconde portion (322) de la poutre structurelle composite stratifiée ;
dans lequel la poutre structurelle composite stratifiée est configurée pour être disposée de manière adjacente à une ouverture de soute de train d'aéronef (150) ;
dans lequel la première distance de la poutre structurelle composite stratifiée est supérieure à la seconde distance, dans lequel la première portion de la poutre structurelle composite stratifiée est adjacente à l'ouverture de soute de train du fuselage, et dans lequel la seconde portion de la poutre structurelle composite stratifiée est disposée plus loin de l'ouverture de soute de train que la première portion de la poutre structurelle composite stratifiée, et
dans lequel la poutre structurelle composite stratifiée est une poutre discontinue (202) et comprend en outre une première extrémité près de la première portion de la poutre structurelle composite stratifiée et le fuselage comprend en outre une poutre de soute de train (430, 432, 434) couplée à la première extrémité,
dans lequel la poutre de soute de train définit en outre une portion verticale de la soute de train, et en outre dans lequel la poutre structurelle composite stratifiée discontinue et la poutre de soute de train sont un composant.

2. Aéronef selon la revendication 1, dans lequel le fuselage comprend en outre une poutre structurelle composite stratifiée continue (208).

3. Aéronef selon les revendications 1 et 2, dans lequel le fuselage comprend en outre une peau de fuselage et au moins une portion de la première bride se conforme à une portion intérieure de la peau de fuselage.

4. Aéronef selon les revendications 1 à 3, dans lequel la poutre structurelle composite stratifiée passe de manière lisse entre la première portion de la poutre structurelle composite stratifiée discontinue et la seconde portion de la poutre structurelle composite stratifiée discontinue.

5. Aéronef selon les revendications 1 à 4, dans lequel la poutre structurelle composite stratifiée discontinue comprend une fibre de carbone et de la résine.

6. Aéronef selon les revendications 1 à 5, comprenant en outre :
une aile (172) couplée au fuselage ; et
un propulseur d'aéronef (100) couplé à l'aile et/ou au fuselage.

7. Procédé comprenant :
le montage d'un pli sur un support de pli ;
le chargement du support de pli dans un outil de formation d'arc de pince robotique ;
le déplacement d'une tête de formation de l'outil de formation d'arc de pince robotique vers une première portion (320) du pli, dans lequel le pli forme au moins une couche d'une poutre structurelle composite stratifiée d'aéronef, et dans lequel la poutre structurelle composite stratifiée d'aéronef comprend une âme à hauteur variable (316), une première bride (312) située sur une portion extérieure de l'âme, et une seconde bride (314) située sur une portion intérieure de l'âme ;
la formation du pli au niveau de la première portion, et dans lequel la première bride et la seconde bride sont séparées d'une première distance au niveau de la première portion du pli ;
le déplacement de la tête de formation à une seconde portion (322) du pli ; et
la formation du pli au niveau de la seconde portion, dans lequel la première bride et la seconde bride sont séparées d'une seconde distance au niveau de la seconde portion du pli ;
dans lequel la poutre structurelle composite stratifiée est configurée pour être disposée de manière adjacente à une ouverture de soute de train d'aéronef (150) ;
dans lequel la première distance de la poutre structurelle composite stratifiée est supérieure à la seconde distance, dans lequel la première portion du pli est adjacente à l'ouverture de soute de train du fuselage, et dans lequel la seconde portion du pli est disposée plus loin de l'ouverture de soute de train que la première portion du pli ; et
dans lequel la poutre structurelle composite stratifiée est une poutre discontinue (202) et comprend en outre une première extrémité disposée près de la première portion du pli et le fuselage comprend en outre une poutre de soute de train (430, 432, 434) couplée à la première extrémité,
dans lequel la poutre de soute de train définit en outre une portion verticale de la soute de train, et en outre dans lequel la poutre structurelle composite stratifiée discontinue et la poutre de soute de train sont un composant.

8. Procédé selon la revendication 7, comprenant en outre :
le couplage de la tête de formation à l'outil de formation d'arc de pince robotique.

9. Procédé selon les revendications 7 et 8, dans lequel le pli est un pli en résine composite.
